Europäisches Patentamt

European Patent Office

Office européen des brevets

(19)

(11) Numéro de publication : **0 059 145**
**B1**

(12) # FASCICULE DE BREVET EUROPÉEN

(45) Date de publication du fascicule du brevet :
**05.06.85**

(51) Int. Cl.⁴ : **C 03 B 37/06, D 01 D 5/14**

(21) Numéro de dépôt : **82400282.8**

(22) Date de dépôt : **18.02.82**

(54) Procédé et dispositif pour la fabrication de fibres à partir de matières étirables.

(30) Priorité : **19.02.81 FR 8103276**

(43) Date de publication de la demande :
**01.09.82 Bulletin 82/35**

(45) Mention de la délivrance du brevet :
**05.06.85 Bulletin 85/23**

(84) Etats contractants désignés :
**AT BE CH DE GB IT LI LU NL SE**

(56) Documents cités :
**EP-A- 0 013 237**
**FR-A- 2 401 110**
**FR-A- 2 423 558**
**US-A- 2 515 738**

(73) Titulaire : **ISOVER SAINT-GOBAIN**
**Les Miroirs 18, avenue d'Alsace**
**F-92400 Courbevoie (FR)**

(72) Inventeur : **Levecque, Marcel**
**36, rue d'Eaubonne**
**F-95210 Saint-Gratien (FR)**
Inventeur : **Battigelli, Jean A.**
**17, rue Edouard Vaillant**
**F-60290 Rantigny (FR)**
Inventeur : **Plantard, Dominique**
**16, route de Mouy**
**F-60290 Rantigny (FR)**
Inventeur : **Langlais, Gérard**
**3, rue du Docteur Schweitzer Nogent-sur Oise**
**F-60100 Creil (FR)**
Inventeur : **Fournier, René**
**Villa des Sapins Vaux-sous-Cambronne**
**F-60290 Rantigny (FR)**

(74) Mandataire : **Le Vaguerese, Sylvain Jacques et al**
**SAINT-GOBAIN RECHERCHE 39, quai Lucien Lefranc**
**F-93304 Aubervilliers Cedex (FR)**

Jouve, 18, rue St-Denis, 75001 Paris, France

## Description

L'invention est relative à la formation de fibres par étirage de matériaux thermoplastiques, au moyen de courants gazeux.

De façon plus précise l'invention concerne la formation de fibres par un procédé dans lequel la matière à fibrer est introduite sous la forme d'un filet étirable dans des courants gazeux interagissant les uns sur les autres pour créer un écoulement tourbillonnaire organisé et stable. Un tel procédé est décrit dans le brevet français n° 2 223 318.

Ce brevet antérieur s'était fixé pour but notamment de faire pénétrer un filet de matériau étirable à l'intérieur d'un courant gazeux à grande vitesse, sans que la continuité du filet soit rompue. Ce but a été atteint en créant dans le courant gazeux une zone particulière nommée zone d'interaction, dans laquelle le filet de matière est introduit. La zone d'interaction est créée au moyen d'un jet gazeux dirigé transversalement au courant gazeux et pénétrant dans ce dernier.

En plus de l'introduction du filet de verre dans le courant gazeux, le jet entraîne la formation d'un écoulement très particulier, caractérisé par la présence de deux tourbillons tournant en sens inverse l'un de l'autre. Cet écoulement tourbillonnaire qui prend naissance au point de pénétration du jet dans le courant est stable et, comme il a été dit dans ce brevet n° 2 223 318, permet par sa régularité un étirage continu des fibres.

D'autres demandes de brevets, et brevets français, décrivent des modifications et perfectionnements du procédé et des dispositifs présentés dans ce premier brevet. Ainsi il a été proposé dans le brevet français n° 2 362 222 de faire en sorte que le filet de matière étirable entre en contact avec le jet avant que celui-ci ne pénètre dans le courant principal. Il a été également proposé dans le brevet français n° 2 374 440, de modifier l'écoulement du jet au moyen d'un déflecteur, pour former dans ce jet une zone favorisant l'introduction de la matière étirable, et dans une certaine mesure conduisant à un étirage « primaire » du filet de matière avant même qu'il ne pénètre dans le courant gazeux.

Les procédés et dispositifs antérieurs se rapportant à ces techniques, que nous désignerons ci-après sous le nom de techniques « tor », aboutissent à la formation de fibres dans des conditions très intéressantes.

L'invention a pour but d'améliorer encore la mise en œuvre de ces techniques.

Pour illustrer le genre d'amélioration auquel s'attache l'invention considérons le cas de la formation des fibres de matériaux verriers. Ce cas, comme il a été dit dans les brevets antérieurs cités, représente en effet un type d'application industrielle particulièrement important.

Pour la fabrication de fibres de verre par les procédés traditionnels, c'est-à-dire les procédés autres que ceux mettant en œuvre les techniques « tor », les installations existantes sont dans l'ensemble composées de la façon suivante. Un four de fusion délivre le matériau à fibrer et alimente les organes de fibrage par l'intermédiaire d'un système de distribution. Les fibres formées dans les organes de fibrage sont véhiculées par des courants gazeux vers un tapis récepteur disposé transversalement à ces courants. En outre, lorsque l'on forme un matelas isolant, les fibres, sur leur trajectoire, entre les organes de fibrage et le tapis récepteur, sont enduites de produits liants, et le matelas de fibres est envoyé dans une étuve pour le traitement des liants.

Dans une installation du type que l'on vient de considérer, le plus généralement, le matériau à étirer s'écoule du four vers les organes de fibrage par gravité, le courant gazeux portant la fibre est orienté suivant une direction voisine de la verticale, de haut en bas, et le tapis récepteur est disposé pratiquement à l'horizontale. Cet agencement n'est pas arbitraire. Il est commandé par une série de nécessités pratiques.

Ainsi pour une production de volume important, la préparation de la matière à fibrer s'effectue ordinairement suivant la technique dite de la fusion directe, c'est-à-dire une technique dans laquelle la composition préparée par fusion est envoyée directement au fibrage. On utilise à cet effet des fours de grande capacité alimentant par l'intermédiaire d'avant-corps, une ou plusieurs chaînes de fabrication présentant chacune ordinairement plusieurs postes de fibrage. Il va de soi que le parcours du matériau, fondu du four jusqu'aux postes de fibrage, ne doit pas être trop long, et que celui-ci doit être peu différent d'un poste de fibrage à un autre, pour assurer un maximum d'homogénéité dans les conditions de travail des différents postes.

Par ailleurs, la présence d'un avant-corps de grandes dimensions dans ces installations soulève des difficultés techniques de réalisation, d'entretien, mais surtout accroît les coûts de fonctionnements. En effet, le maintien dans l'avant-corps du matériau étirable, dans les conditions de température appropriées, entraîne une forte consommation d'énergie, et cette consommation est d'autant plus importante que l'avant-corps est plus long.

Pour ces raisons, il est préférable de limiter la longueur de cet avant-corps, ce qui conduit à disposer les postes de fibrage aussi près que possible les uns des autres.

D'autres raisons techniques rendent préférable une installation « compacte ». Ainsi habituellement les différents postes de fibrage sont placés au sommet d'une unique chambre de réception, fermée latéralement par des cloisons, et dont la partie inférieure est constituée par le tapis récepteur. Les

2

courants gazeux portant la fibre sont aspirés à travers le tapis récepteur, tandis que la fibre est retenue sur ce même tapis. De façon très simplifiée, la quantité d'air qu'il faut aspirer, et donc l'énergie consommée à cet effet, sont d'autant plus grandes que la surface de réception s'accroît. Il est donc souhaitable, là encore, de limiter les dimensions de la chambre de réception, et de rapprocher les postes de fibrage.

Compte tenu de ce qui vient d'être indiqué, on a été conduit dans ce type d'installation, à diriger les flux gazeux nécessaires à l'étirage et au transport de la fibre, de façon que le fonctionnement d'un poste donné ne perturbe pas celui des postes voisins, à savoir, à donner à ces flux gazeux des directions voisines de la verticale.

Par ailleurs, il était hautement souhaitable de pouvoir mettre en œuvre les procédés du type « tor », dans des installations conçues pour des méthodes antérieurement connues pour tout ce qui ne se rapporte pas à l'opération de fibrage proprement dite, à savoir, le four, l'avant-corps, les chambres de réception, les étuves, etc... et ceci pour différentes raisons. Une première raison est de limiter les coûts de lancement de ces nouvelles techniques. Une autre raison est par exemple de pouvoir utiliser au choix les techniques traditionnelles ou nouvelles, en fonction des résultats souhaités, sans pour cela être obligé de disposer d'installations complètes, distinctes.

La disposition « verticale » des courants gazeux qui paraissait donc souhaitable soulevait néanmoins certaines difficultés pour l'application des techniques « tor ».

Pour pallier ces difficultés, une solution envisagée avait été de produire la fibre dans des courants gazeux peu inclinés par rapport à l'horizontale, et, immédiatement après la formation de la fibre, de modifier la trajectoire des courants gazeux à l'aide de conformateurs, c'est-à-dire de larges dispositifs canalisant ces courants gazeux et les déviant pour les amener à une direction voisine de la verticale. Néanmoins ces dispositifs de canalisation sont encore relativement encombrants, ce qui limite les possibilités de rapprochement des postes de fibrage d'une même ligne.

Les inventeurs se sont donc efforcés de trouver des moyens permettant l'application des techniques de fibrage « tor » dans des conditions améliorées, notamment en disposant les courants gazeux mis en œuvre pour la formation et le transport des fibres, suivant une direction générale proche de la verticale. Nous détaillerons dans la suite les difficultés auxquelles les inventeurs se sont heurtés au cours des recherches qui ont abouti à l'invention.

De façon générale, la présente invention concerne un procédé pour la formation de fibres à partir d'une matière thermoplastique au moyen de courants gazeux assurant l'étirage et le transport des fibres jusqu'à une surface réceptrice, procédé dans lequel on engendre un courant gazeux et au moins un jet gazeux, le jet gazeux ayant une section transversale plus petite que celle du courant et une énergie cinétique par unité de volume plus grande que celle du courant, de sorte que le jet étant dirigé de façon qu'il rencontre le courant, il pénètre dans ce dernier sans le traverser en formant une zone d'interaction où s'établissent des mouvements tourbillonnaires de structure régulière, zone dans laquelle est conduit un filet de matière étirable, ledit filet étant issu d'une source de matière étirable. A (FR-A-2 223 318). Il est caractérisé en ce que le courant gazeux combiné formé du jet et du courant est orienté sans l'aide d'obstacle de haut en bas, suivant une direction proche de la verticale et faisant un angle avec la verticale inférieur à 45° et dans le plan défini par le jet et le filet de matière étirable, le jet et le courant convergeant de part et d'autre du filet de matière étirable.

L'invention concerne aussi des dispositifs pour la mise en œuvre du procédé défini ci-dessus.

Dans la suite de la description, lorsque nous parlons du jet, il va de soi, sauf indication contraire, que ceci concerne aussi les cas pour lesquels plusieurs jets sont utilisés avec un même courant. De la même façon nous parlons de filet de matière provenant de la source d'alimentation. Ceci recouvre le cas effectif selon lequel la matière passant par les orifices d'une filière est délivrée directement sous forme de filets, mais aussi ceux dans lesquels la matière, s'écoulant par exemple à partir d'une fente ou d'un déversoir à trop plein, se présente initialement sous la forme d'une nappe qui est ultérieurement divisée en filets par l'action de moyens variés, et notamment par l'effet de courants gazeux induits par les jets, comme cela a été décrit dans les documents antérieurs cités.

L'inclinaison du courant combiné par rapport à la verticale peut varier dans une assez large mesure sans perdre les avantages liés à cette disposition particulière à l'invention. Néanmoins, si l'on s'écarte trop de la direction verticale, ces avantages sont moins sensibles et tendent même à disparaître. Par direction proche de la verticale, on entend une direction telle que le rapprochement des postes de fibrage le long d'un même avant-corps, ne soit pas limité par des considérations relatives à la trajectoire d'écoulement de ces courants gazeux combinés. En pratique, l'angle de la direction du courant combiné avec la verticale ne dépasse pas 45°. Les meilleurs effets sont obtenus lorsque cet angle est au plus de 25°.

La direction du courant combiné dépend à la fois des caractéristiques du courant et de celles du jet. Etant donné que le courant véhicule une quantité de gaz plus importante que celle du jet, c'est lui qui détermine de façon prépondérante l'orientation du courant combiné. Sous l'influence du jet, la direction du courant est cependant déviée. La mesure de cette déviation est fonction des quantités de mouvement, et de l'orientation respectives du courant et du jet. Dans les modes de réalisation les plus usuels cette déviation par rapport à la direction du courant ne dépasse pas 30° et est le plus souvent de l'ordre d'une dizaine de degrés.

0 059 145

Comme pour toutes les méthodes de fibrage au moyen de courants gazeux, il est nécessaire pour que l'étirage soit assuré de façon efficace, que la matière étirable pénètre dans le courant, et ceci en un point où il présente un maximum de puissance. Il faut donc faire en sorte que le filet de matière pénètre au cœur du courant, et à proximité de l'orifice d'émission de ce courant. La difficulté pour faire pénétrer le filet de matière dans le courant gazeux est facilement compréhensible. Elle résulte de la finesse du filet de matière, et de la vitesse du courant gazeux.

Dans le cas présent, sans dispositions particulières, le filet et le courant suivant initialement des directions peu inclinées l'une par rapport à l'autre, voire même parallèles, le filet serait repoussé par le gaz du courant et demeurerait à la périphérie de celui-ci.

Pour faire pénétrer le filet de matière dans le courant, on utilise le jet de la façon suivante : le filet de matière s'écoulant par gravité à partir de la source suit une trajectoire qui recoupe celle du jet, avant que ce dernier ne pénètre dans le courant. Le filet de matière intercepté par le jet est ainsi porté par ce dernier à l'intérieur du courant, dans la zone d'interaction du courant et du jet.

Compte tenu des conditions d'inclinaisons du courant gazeux par rapport à la verticale, et des conditions concernant l'angle minimal entre le courant et le jet, pour qu'il ait pénétration, et dont il est question plus loin, la source de matière étirable, et le filet qui en est issu, se trouvent placés dans l'angle de convergence du courant et du jet. Cette disposition est définie dans le plan qui comprend à la fois le jet et le filet de matière. Autrement dit, toujours dans ce plan, les orifices d'émission du jet et du courant sont situés de part et d'autre du filet de matière. .

Un objet de l'invention est donc, dans un procédé de fabrication de fibre suivant le principe « tor », et dans lequel un espace libre est compris dans l'angle formé par le jet et le courant, d'introduire la matière étirable dans cet espace libre, c'est-à-dire entre le jet et le courant. Dans une disposition préférée le filet de matière étirable qui s'écoule depuis l'orifice d'alimentation, sans support, dans cet espace libre, rencontre la trajectoire du jet avant que celui-ci ne pénètre dans le courant.

Les recherches des inventeurs leur ont permis en outre de mettre en évidence divers phénomènes dont il faut tenir compte pour se placer dans les meilleures conditions opératoires.

Les inventeurs ont ainsi constaté, dans l'étude de la circulation des gaz résultant de l'interaction du courant et du jet, non seulement la formation du courant combiné dont il a été question précédemment, mais aussi celle de courants que nous désignons ci-après sous le nom de courants de rejet ou rejets. Ces courants se développent dans les conditions que nous verrons, dans l'angle formé par le jet et le courant. La remontée d'un courant gazeux vers la source de matière étirable, et en sens inverse de l'écoulement du filet, est un facteur d'instabilité et de perturbation.

L'introduction du filet de matière dans le jet avant que celui-ci ne pénètre dans le courant, comme prévu selon l'invention, permet dans une large mesure de limiter les inconvénients liés à la présence des courants de rejet. Le fait d'introduire le filet en premier dans le jet est d'autant plus efficace contre les phénomènes de rejet, que la distance séparant le point d'introduction du filet dans le jet, du point de rencontre du jet et du courant, est plus grande. Comme on le verra plus loin, et pour d'autres raisons, cette distance doit cependant rester relativement petite, et d'autres conditions ont dû être définies pour permettre, même dans ces cas, une mise en œuvre pleinement satisfaisante.

L'étude des courants de rejet a montré en effet qu'ils dépendaient de plusieurs facteurs, et que par un choix convenable de ceux-ci, l'opérateur pouvait pratiquement les faire disparaître, ou au moins faire en sorte qu'ils ne compromettent pas la bonne marche du procédé. Les principaux facteurs qui influent sur le rejet sont le débit et la vitesse du courant et du jet, et l'angle de ceux-ci au point d'impact. On constate que ces facteurs interviennent aussi dans la façon dont le jet pénètre dans le courant et interagit avec celui-ci, et par suite qu'ils jouent aussi un rôle dans les mécanismes qui commandent la formation des fibres.

Dans la pratique, l'expérimentateur chargé de déterminer les meilleures conditions de fonctionnement peut par exemple se fixer les caractéristiques du courant et du jet, et établir par quelques essais le meilleur angle entre jet et courant, en tenant compte des indications suivantes.

Si l'on fait varier l'angle entre le jet et le courant, les autres paramètres restant les mêmes, on constate que le rejet est d'autant plus faible que l'angle est plus petit. Au-delà d'une certaine limite il n'y a pratiquement plus d'influence défavorable en ce qui concerne la formation de la fibre. Par ailleurs, cet angle ne doit pas être inférieur à la valeur limite pour laquelle le jet ne pénètrerait plus, ou plus suffisamment, dans le courant pour former la zone d'interaction requise selon l'invention pour obtenir un fibrage satisfaisant. Des essais de routine permettent de déterminer dans chaque cas le meilleur compromis.

Dans la pratique, à titre indicatif, des dispositions avantageuses sont obtenues pour un angle entre le jet et le courant qui n'est pas inférieur à 10°, et de préférence pas inférieur à 20°. De même de façon avantageuse, cet angle n'est pas supérieur à 60°, et de préférence pas supérieur à 50°.

Des exemples de dispositions répondant aux critères précisés ci-dessus sont donnés plus loin dans la description.

Dans ce qui précède nous avons envisagé le cas où seul l'angle variait. L'expérimentateur peut faire varier bien d'autres paramètres, et en particulier comme on l'a dit, le débit ou la vitesse du courant ou du jet. Ceci peut être obtenu en modifiant les caractéristiques de ces courants à leur origine, c'est-à-dire en modifiant le réglage ou la nature des générateurs de courant ou de jet. Il est aussi possible de maintenir

4

0 059 145

les mêmes caractéristiques initiales du courant et du jet, et de changer les distances des orifices d'émission au point de rencontre. Si sur une certaine distance on peut considérer que le courant demeure pratiquement identique, le jet qui est de plus petite dimension se modifie davantage avec la distance à son point d'émission. La vitesse du jet notamment décroît relativement rapidement.

Pour éviter une perte d'énergie disponible pour l'étirage, il est préférable de disposer les orifices émetteurs de jet et de courant de façon aussi rapprochée que possible, ce qui implique que l'onl tienne compte des questions d'angles qui ont 'été considérées précédemment. Par ailleurs, au sujet des distances entre les différents organes du dispositif (générateur de courant, émetteur de jet, source de matière étirable...) une limite minimum est fixée bien évidemment par leur encombrement respectif. Dans leur positionnement, il faut encore habituellement faire en sorte que les conditions de température imposées à ces divers éléments soient bien préservées, ce qui nécessite de les placer à une certaine distance les uns des autres, et/ou, de les protéger par des revêtements isolants.

Dans ce qui précède, nous avons indiqué comment choisir et disposer les courants gazeux et la source d'alimentation pour éviter les effets indésirables des courants de rejet. Il est également possible d'introduire des moyens supplémentaires, soit pour empêcher la formation de ces rejets, soit pour faire en sorte qu'ils ne perturbent pas la formation de la fibre.

Un moyen supplémentaire consiste par exemple, en l'adjonction d'une arrivée de gaz dans l'angle formé par le courant et le jet, les caractéristiques de cette alimentation en gaz, direction, pression, volume, étant choisies de façon à s'opposer à la remontée des rejets vers la source de matière étirable où l'extrémité du générateur du courant. Cette alimentation en gaz peut se faire par exemple sous forme d'une ou plusieurs nappes gazeuses, maintenant d'une certaine façon un équilibre dynamique qui s'oppose, sinon à l'apparition des courants de rejets, au moins à leur remontée dans l'angle du jet et du courant. Dans tous les cas, la quantité de gaz additionnel utilisée pour s'opposer aux courants de rejets est très inférieure à celle des jets et a fortiori à celle du courant.

Dans des modes de réalisation de l'invention, il est avantageux de déterminer l'orientation du jet comme il vient d'être dit, tout en modifiant sa structure de façon que le filet de matière étirable qui est entraîné par ledit jet soit stabilisé et, dans une certaine mesure, subisse un premier étirage avant de pénétrer dans le courant. Il est avantageux notamment, de dévier le jet tout en le modifiant de l'une des façons décrites dans le brevet français 2 374 440, ou dans l'une des demandes de brevet français 2 401 109, 2 401 110, 2 401 111, 2 401 112.

Un type de modification-déviation du jet particulièrement avantageux, est celui qui consiste à former une zone d'écoulement laminaire en dépression par rapport à l'atmosphère avoisinante. Une telle zone entraîne la formation de courants induits dans le jet. En disposant la source de telle sorte que le filet se trouve dans les courants induits, en regard de la zone en question, l'introduction du filet dans le jet est obtenue même si une légère déformation fait que le filet n'est pas rigoureusement en face du jet. Il se produit un effet de stabilisation du filet de matière qui est particulièrement avantageux. Par ailleurs, la formation d'une zone d'écoulement laminaire dans le jet s'accompagne ordinairement d'autres modifications, et notamment de l'apparition de deux tourbillons stables, tournant en sens inverse l'un de l'autre, et encadrant la zone d'écoulement laminaire. La présence de tels tourbillons dans le jet, avant que celui-ci rencontre le courant, est avantageuse pour le traitement du filet de matière, en ce qu'elle favorise l'étirage primaire de ce filet dans le jet.

Les modifications du jet aboutissant à la formation de la zone d'écoulement laminaire encadrée par deux tourbillons contra-rotatifs peuvent être obtenues de diverses manières.

Un premier mode d'obtention de ces modifications consiste à placer un volet déflecteur plan sur la trajectoire du jet. La direction, de même que l'importance des modifications dans la structure du jet, peuvent être variées avec un tel déflecteur : par exemple en changeant l'angle du déflecteur par rapport à la direction initiale du jet, ou en faisant en sorte que le déflecteur intercepte transversalement une partie plus ou moins grande du jet, etc...

Un autre mode d'obtention des modifications et de la déviation en question consiste à disposer sur le trajet du jet un élément à surface convexe, notamment un barreau cylindrique. La présence de la surface convexe entraîne des effets variés, en fonction notamment de sa courbure et de sa position exacte par rapport au jet. Pour un barreau cylindrique, on peut ainsi distinguer deux positions particulières correspondant l'une au barreau à l'intérieur du jet, et l'autre au barreau longé par le jet sur une partie seulement de sa surface.

La littérature antérieure indique aussi, non plus la modification d'un jet à l'aide de moyens mécaniques, mais l'utilisation d'une paire de jets sensiblement identiques, situés dans un même plan (plan commun au filet de matière), et se rencontrant pour former un écoulement combiné. Ce mode est aussi applicable dans le cadre de l'invention.

Ces exemples de modification-déviation sont donnés à titre d'illustration et n'ont aucun caractère limitatif. D'autres modes antérieurement décrits peuvent être utilisés, sous la seule réserve qu'ils puissent répondre aux exigences générales pour la réalisation de l'invention et qui ont été exposées précédemment. En particulier, il est possible de combiner plusieurs moyens de modification tels que ceux indiqués ci-dessus, pour aboutir à un ensemble d'effets que ne permettrait pas d'atteindre l'usage d'un seul de ces moyens.

Il peut être avantageux pour la réalisation de l'invention de faire en sorte que le jet présente au long

5

de sa trajectoire plusieurs orientations. Nous avons dit en effet quelles étaient les conditions d'inclinaison que devait avoir le jet au point de rencontre avec le courant, mais des conditions différentes peuvent être préférées pour d'autres parties de sa trajectoire.

On l'a vu, l'entraînement du filet dans le jet est favorisé par la présence dans ce dernier d'une zone d'écoulement laminaire. Cette zone est de dimensions limitées. Pour bénéficier des avantages énoncés, il faut que le filet de matière rencontre le jet au niveau de cette zone. Le positionnement du filet par rapport à cette zone est d'autant mieux assuré que le jet, à ce niveau, suit une direction sinon normale à celle de l'écoulement de matière, au moins nettement transversale.

Pour satisfaire aux deux conditions d'inclinaison distinctes, au niveau de l'introduction du filet dans le jet, et de la pénétration du jet dans le courant, il est avantageux de disposer d'une combinaison de moyens modifiant la direction et la structure du jet aux points appropriés. Un exemple particulièrement préféré de ce type de combinaison comprend, d'une part, un volet déflecteur assurant la formation de la zone laminaire encadrée par des tourbillons et une première déviation du jet, et d'autre part, une surface convexe longée par le jet et qui assure principalement la déviation complémentaire du jet. La disposition de ces deux sortes de moyens peut être faite de façon que leurs effets soient successifs. Elle peut aussi conduire à des effets pratiquement simultanés. Cette simultanéité est rendue possible, notamment lorsque les moyens assurant ces deux modifications sont disposés respectivement de part et d'autre du jet. Si l'on se réfère à la « courbure » du jet, le volet déflecteur se situe du côté convexe du jet tandis que la surface déviatrice convexe se trouve dans la partie concave du jet. Avantageusement, la surface convexe utilisée est constituée par un barreau cylindrique.

D'autres combinaisons de moyens sont bien entendu possibles, et en particulier celles dans lesquelles plusieurs surfaces déviatrices convexes se succèdent, ou encore celles dans lesquelles une paire de jets est associée à une surface déviatrice, etc...

La mise en œuvre de l'invention, comme pour les techniques antérieures du type « tor », n'est pas limitée à une catégorie particulière de matière étirable. De façon générale, toute matière susceptible de former des fibres sous l'action de courants gazeux est utilisable.

Traditionnellement, les matériaux utilisés pour former les filets de matière qui sont transformés en fibres, sont des matériaux thermoplastiques. Ils fondent ou se ramollissent par élévation de température et se solidifient en refroidissant.

Les matériaux thermoplastiques fibrables sont de nature très variée. Ils peuvent être organiques ou minéraux. Il peut s'agir notamment de matériaux polymères fibrables tels que les polymères vinyliques, styréniques, les polyalkylènes (en particulier, les polyéthylènes et polypropylènes), les polyesters, les polyamides, de même que les polymères ou copolymères analogues connus pour pouvoir être fibrés. Néanmoins, parmi les matériaux utilisables pour la mise en œuvre du procédé selon l'invention, les matériaux minéraux à base de silice constituent une catégorie particulièrement préférée, en raison des très importantes applications des produits obtenus dans les domaines de l'isolation thermique, acoustique, dans celui du renforcement des matériaux plastiques, etc...

Par matériaux minéraux à base de silice, on entend les matériaux susceptibles après fusion de conduire à des produits à l'état vitreux, et qui renferment dans leur composition l'équivalent d'au moins 40 % en poids de silice.

Ces matériaux sont notamment les verres, les laitiers sous-produits de fonderie, les basaltes, et les compositions analogues traditionnellement utilisées pour la fabrication des produits connus sous les noms de fibre et laine de verre, laine de roche, etc...

Pour réaliser l'invention, le matériau choisi doit être dans des conditions permettant son étirage par des courants gazeux. Il est nécessaire qu'il présente une viscosité satisfaisante, compte tenu de l'étirage recherché, de l'état de division préalable (autrement dit, de la dimension des filets traités) de l'intensité de l'étirage, etc. La littérature antérieure fournit pour chaque type de matériau des indications sur les conditions de viscosité appropriées. Les conditions de viscosité, utiles pour la mise en œuvre de l'invention sont analogues à celles des procédés antérieurs du type « tor ».

A titre d'exemple, des valeurs de viscosité satisfaisantes pour les matériaux verriers se situent avantageusement dans l'intervalle de 10 à 1 000 Po et de préférence sont de l'ordre de 50 Po. Ces valeurs ne sont bien entendu qu'indicatives. Il est nécessaire dans la pratique de tenir compte des particularités commandées notamment par le dispositif. Ainsi, par exemple, lorsque la distance entre la source de matière et le point où l'étirage est effectivement réalisé est relativement grande, il peut en résulter un refroidissement du filet de matière qui nécessite une température de départ plus haute, et donc une viscosité plus faible.

Comme on vient de le rappeler, s'agissant de matériaux thermoplastiques, les conditions de viscosité sont directement liées à la température. La littérature fournit pour chaque type de matériau les correspondances existant entre la température et la viscosité.

Il faut souligner le fait que les gammes de températures utiles sont très différentes, selon que l'on considère des matériaux organiques ou des matériaux minéraux. Pour les premiers, la température de fusion ou de ramollissement jusqu'à la viscosité souhaitée, ne dépasse ordinairement pas quelques centaines de degrés. En pratique, pour les plus résistants, ces matériaux ne peuvent supporter des températures supérieures à environ 300 °C, et les plus sensibles à la chaleur se ramollissent à moins de 100 °C. Pour les matériaux minéraux à base de silice, comme les verres, les températures de fusion ou de

6

0 059 145

ramollissement les plus basses ne sont pas inférieures à 650 °C, et certains minéraux comme les silices, qui sont d'un grand intérêt pour la formation de fibres isolantes, ne fondent qu'à des températures beaucoup plus élevées et qui atteignent ou dépassent 1 800 °C.

Les caractéristiques de composition, température, vitesse ou de pression du courant ou du jet servant à l'étirage, et au transport des fibres, ne sont pas non plus spécifiques de l'invention. Des conditions analogues se retrouvent pour les techniques « tor » antérieures. Nous rappelons ci-après de façon brève ces caractéristiques.

La composition des gaz est seulement limitée par le fait qu'elle ne doit pas être néfaste à la qualité des fibres préparées. En particulier elle ne doit pas dégrader leur état de surface. On sait en effet que les qualités mécaniques des fibres (résistance à la traction ou à la flexion) sont étroitement liées à leur état de surface. Sous cette réserve, on peut utiliser n'importe quel type de gaz. Ordinairement, pour ce genre de traitement, on a recours à de l'air, de la vapeur ou à des gaz de combustion. Ces derniers sont particulièrement préférés lorsque l'on souhaite effectuer l'étirage dans un gaz à température élevée. En choisissant la nature des combustibles et la proportion d'air ou d'oxygène du mélange introduit dans le brûleur, on peut obtenir des gaz de combustion à température variable. L'opérateur fixe ainsi à son gré la température du gaz servant à l'étirage.

Il n'est pas nécessaire que le courant et le jet soient constitués d'un gaz de même nature. Il n'est pas nécessaire non plus qu'ils soient à la même température.

Pour ce qui concerne la température, et comme il résulte déjà de ce qui a été dit précédemment, on dispose de plusieurs moyens pour la régler dans la zone de fibrage : le filet de matière, le jet et le courant. La combinaison de ces moyens détermine la température de fibrage.

Il faut remarquer à ce sujet que le fait de disposer de plusieurs moyens réglés indépendamment est un avantage. En effet, la température d'un ou plusieurs de ces moyens peut être commandée par d'autres considérations que celles relatives à la température de la zone de fibrage. Ainsi pour la température du filet, des exigences supplémentaires peuvent être liées aux étapes antérieures de fusion et/ou de passage dans une filière utilisée comme source d'alimentation. La température de fusion peut, notamment, être trop élevée par rapport à la température la plus appropriée pour le fibrage. De la même façon pour obtenir un débit suffisant avec des filets de faible dimension, on peut être conduit à élever la température de la matière à fibrer au-delà de ce qui est souhaitable pour l'étirage des fibres. Dans des cas de ce genre, on peut mettre à profit la possibilité de disposer d'un jet ou d'un courant dont la température est réglable indépendamment de celle du filet de matière.

Une combinaison proposée antérieurement pour le fibrage des matériaux minéraux consiste à alimenter le jet au moyen d'air à faible température ou même à la température ambiante, et à former le courant gazeux au moyen d'un brûleur délivrant des gaz de combustion à température élevée.

Les pressions et vitesses des gaz utilisés ne sont pas spécifiques de la présente invention. Les mêmes considérations qui ont été faites pour les procédés antérieurs « tor » s'appliquent également, et des valeurs déterminées de ces paramètres figurent dans la littérature relative à ces procédés « tor ».

On peut rappeler brièvement les conditions générales qui dirigent le choix de ces paramètres.

Ordinairement, et pour des raisons de commodité évidentes, le procédé est mis en œuvre dans un environnement à la pression atmosphérique, ou voisine de la pression atmosphérique. Dans la zone de fibrage la pression est donc peu différente de celle de l'atmosphère ambiante. Ceci ne préjuge pas de la pression des gaz du courant ou du jet dans leurs générateurs respectifs avant qu'ils n'aient franchi les orifices d'émission. Pour engendrer ce jet et ce courant avec une certaine vitesse, la pression correspondante, à l'intérieur du générateur, est bien entendu supérieure à la pression ambiante.

Pour assurer l'étirage du filet de matière, il faut que les gaz exercent à sa surface un effet d'entraînement. L'effet d'entraînement, autrement dit la force exercée sur le filet par le gaz est directement liée à la vitesse de ce dernier. A température constante, plus la vitesse est grande, plus intense est l'étirage, et donc plus on a tendance à former des fibres fines. L'accroissement de la vitesse, qui paraît donc un facteur favorable pour ces procédés, est cependant limité. En effet, pour des vitesses trop élevées, l'étirage devient si violent que le filet de matière étirable se rompt. Les fragments formés subissent alors un étirage irrégulier, et souvent incomplet. Le maintien du filament continu est, dans les procédés du type « tor », un des facteurs essentiels pour l'obtention de fibres longues et fines. On se place donc selon l'invention comme pour les procédés antérieurs, à des vitesses des gaz d'étirage inférieures à celles pour lesquelles on ne peut éviter la fragmentation systématique du filet de matière.

On comprend que le choix des valeurs des nombreux paramètres intervenant sur le déroulement du procédé résulte nécessairement de compromis entre différentes exigences, et qu'il est nécessaire de passer par des essais préalables de routine pour déterminer les meilleures valeurs dans chaque cas.

Pour ce qui concerne les caractéristiques du courant et du jet, il faut encore rappeler les conditions générales qui doivent être respectées dans les procédés du type « tor ». Le jet doit pouvoir pénétrer dans le courant. Pour cela, il faut que le jet soit de dimension inférieure à celle du courant, et que l'énergie cinétique par unité de volume du jet soit supérieure à celle du courant.

Ces conditions doivent être réalisées dans la zone où le jet rencontre le courant.

En pratique, le rapport des énergies cinétiques, par unité de volume du jet et du courant, est avantageusement supérieur à 1 et inférieur à 1 000, et de préférence supérieur à 1,5 et inférieur à 40.

De façon générale, outre les moyens utilisés pour dévier et modifier les jets dont nous avons parlé

7

précédemment, les éléments qui constituent le dispositif pour la mise en œuvre du procédé selon l'invention sont analogues à ceux décrits antérieurement dans les brevets et demandes de brevets précités relatifs aux techniques « tor ». Ces éléments, à savoir principalement le générateur de courant, le générateur de jet et la source de matière étirable se distinguent cependant par leur agencement particulier, et par les modifications de structures que cet agencement peut nécessiter.

La source d'alimentation en matière étirable peut notamment prendre les formes décrites antérieurement. Ainsi lorsque la matière à fibrer est une matière minérale, cette source peut être constituée par un creuset réfractaire muni d'une filière dans sa partie inférieure. Il peut s'agir aussi d'une source délivrant la matière à fibrer sous la forme d'une nappe, à partir de laquelle les filets sont formés par l'action combinée des jets et des courants ambiants qu'ils induisent.

Des dispositifs particuliers pour l'alimentation en matière étirable sont décrits notamment dans le brevet français 2 384 723. Dans ces dispositifs la matière à l'état fondu est conduite dans un bassin ou réservoir, et de là s'écoule par un seuil à trop plein, soit sous forme de nappe, soit sous forme de filets. Ce genre de source d'alimentation peut également être employé pour la mise en œuvre de l'invention. Il présente l'avantage de permettre le fibrage de matériaux ayant un point de fusion très élevé ou étant très corrosifs, et qui de ce fait entraîneraient une rapide détérioration des filières habituelles.

De façon générale le dispositif pour la mise en œuvre du procédé selon l'invention d'après les techniques de fibrage « tor » comprennent :
— un générateur de courant gazeux
— un émetteur d'une pluralité de jets dirigeant ceux-ci suivant des trajectoires rencontrant celle du courant, et tel que la section droite des jets au point de rencontre soit inférieure à celle du courant, et que l'énergie cinétique par unité de volume des jets soit supérieure à celle du courant et non supérieure à la valeur provoquant la traversée du courant
— une source de matière étirable délivrant la matière sous forme de filets, cette source étant disposée par rapport aux orifices du générateur de courant et de l'émetteur de jets, de façon que les filets soient conduits dans les zones d'interaction des jets et du courant et il est caractérisé en ce que le générateur de courant gazeux, et l'émetteur sont disposés l'un par rapport à l'autre de telle sorte que le courant combiné, formé par le courant et les jets s'écoule suivant une direction voisine de la verticale, l'angle de ce courant avec la verticale restant inférieure là 45°, et que la source de matière étirable est disposée de sorte que dans chaque plan défini par chacun des jets et le filet correspondant, l'orifice de sortie du générateur de courant et celui du jet se trouvent situé de part et d'autre du filet de matière.

La position de la source de matière étirable est de préférence telle que la trajectoire des filets de matière qu'elle délivre rencontre celle des jets correspondants à distance des points de pénétration de ces jets dans le courant gazeux.

Un mode de réalisation du dispositif selon l'invention est caractérisé par l'utilisation de plusieurs moyens pour dévier et/ou modifier la structure des jets avant que ceux-ci ne pénètrent dans le courant gazeux.

Une combinaison de moyens avantageuse comprend des moyens de modification de chacun des jets, disposés sur la trajectoire des jets, et créant dans ceux-ci une zone d'écoulement laminaire encadrée par deux tourbillons, et des moyens pour dévier les jets modifiés, la source d'alimentation en matière étirable étant disposée, par rapport aux moyens de modification, de telle sorte que chaque filet de matière soit dirigé vers la zone d'écoulement laminaire du jet correspondant.

Comme indiqué précédemment, des moyens pour réaliser ces modifications et déviations des jets sont notamment des déflecteurs plans, des surfaces convexes comme des barreaux cylindriques, etc.

Dans le dispositif selon l'invention dans lequel les éléments constitutifs ont des positions relatives telles que le courant gazeux combiné soit orienté suivant une direction voisine de la verticale, on dévie et modifie avantageusement le jet au moyen d'un déflecteur plan. Pour accentuer la déviation du jet après que le filet de verre ait pénétré dans la zone d'écoulement laminaire formée au contact de ce déflecteur, il est avantageux de disposer un barreau cylindrique sur la trajectoire du jet, de telle façon que celui-ci longe une partie de la surface convexe et soit dévié par effet de surface.

Dans ce qui précède on a souligné les caractéristiques du dispositif selon l'invention pour ce qui concerne la disposition des principaux organes mis en œuvre. D'autres particularités les distinguent des dispositifs connus antérieurement.

Ainsi une particularité de l'invention est, pour des dispositifs de mise en œuvre de techniques « tor », de disposer la surface réceptrice des fibres, habituellement constituée par un tapis convoyeur, de façon que le courant gazeux combiné portant les fibres suive une trajectoire faisant un angle au plus égal à 25° avec la normale à cette surface. Cette caractéristique est avantageuse pour ce qui concerne la distribution et l'orientation des fibres dans le produit final. En outre, le fait d'avoir un courant gazeux perpendiculaire à la surface réceptrice (ou voisin de la perpendiculaire) tend à permettre une diminution de la longueur de cette surface et une amélioration du bilan énergétique en ce qui concerne l'aspiration réalisée au travers de cette surface.

Une autre particularité de l'invention est, dans un dispositif pour la mise en œuvre de techniques « tor », l'agencement qui consiste à diriger un courant combiné (formé du courant et des jets), sans que sa trajectoire soit modifiée, directement sur un tapis convoyeur disposé de façon sensiblement horizontale. Autrement dit, selon cet agencement, il n'est pas nécessaire d'utiliser des conformateurs, ou

8

tout autre moyen permettant de changer la direction, pour faire en sorte que le courant se dirige vers le tapis convoyeur.

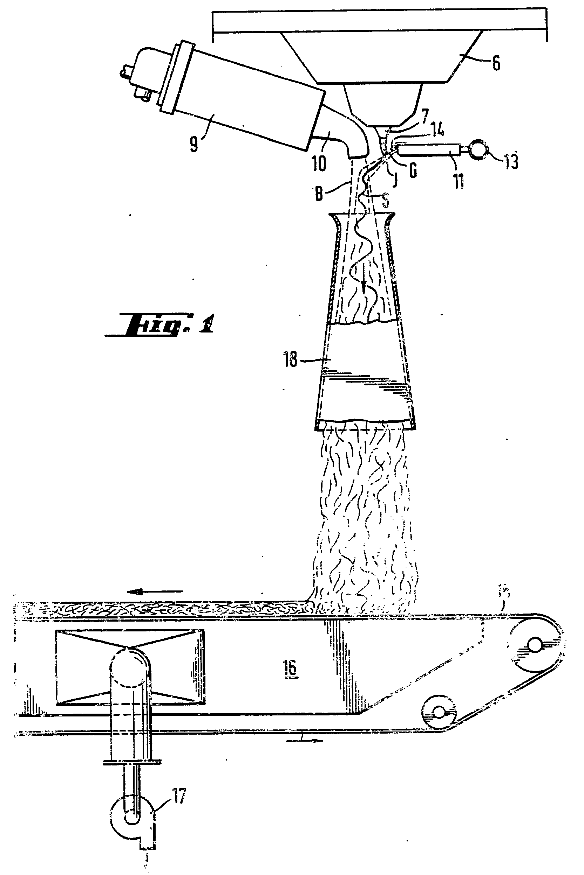

D'autres détails de l'invention sont donnés dans la suite de la description qui fait référence aux figures 1 à 8.

Dans ce qui suit, et notamment dans les exemples, les matériaux verriers minéraux ont été choisis comme type de matériau étirable. Ceci n'a pour but que de simplifier la présentation et ne limite pas la portée de l'invention à ce type de matériau.

La figure 1 est une élévation en coupe partielle d'un mode de réalisation représentant schématiquement un centre de fibrage selon l'invention et le convoyeur de réception des fibres.

La figure 2 est une élévation en coupe partielle, à plus grande échelle, des composants ou organes de fibrage du centre de fibrage de la figure 1.

La figure 3 est une vue similaire à la figure 2, mais représentant les organes de fibrage d'un second mode de réalisation.

La figure 4 montre une troisième variante de mise en œuvre.

La figure 5 est une vue similaire aux figures 2 et 3, montrant les organes de fibrage d'un autre mode de réalisation.

La figure 5a est une vue analogue à celle de la figure 5, et sur laquelle ont été portées les symboles identifiant les dimensions des différents éléments et leurs dispositions relatives.

La figure 5b représente une partie d'un mode de réalisation analogue à celui de la figure 5, dans laquelle le barreau déflecteur est modifié.

La figure 6 représente à plus petite échelle la position d'une série de stations de fibrage disposée le long de la trajectoire du convoyeur de réception des fibres.

La figure 7 représente, sous forme de schéma, un exemple d'influence des paramètres de distance et d'angle entre le jet et le courant sur la formation des rejets.

La figure 8 est un schéma en perspective illustrant le mode de fonctionnement du procédé et du dispositif selon l'invention.

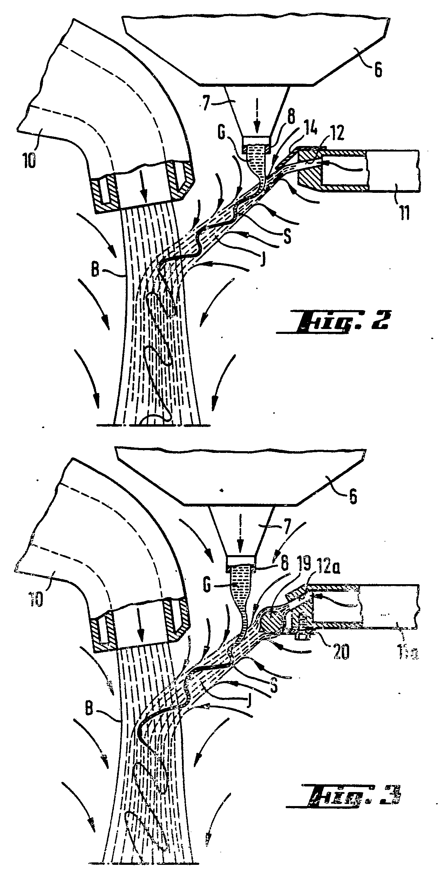

On se reporte tout d'abord aux figures 1 et 2. Ces figures montrent schématiquement un avant-corps 6 auquel est associée une filière 7 qui comporte une pluralité d'organes d'alimentation en verre 8 ; un de ces organes est schématisé en coupe partielle sur la figure 2 pour monter l'alimentation du bulbe G de verre fondu à partir duquel le filet S est entraîné dans l'écoulement du jet comme décrit ci-après.

Sur la gauche des organes d'alimentation en verre 6, 7 et 8, représentés dans les figures 1 et 2, est disposé un générateur 9 de courant principal muni d'une tuyère 10 engendrant le courant B selon une trajectoire dirigée vers le bas, suivant une direction proche de la verticale. La largeur de la tuyère est telle que le jet qui pénètre dans le courant ne le traverse pas, et forme une zone d'interaction et un écoulement combiné. Avantageusement, la tuyère d'émission du courant principal s'étend dans la direction perpendiculaire au plan des figures, de sorte que le courant principal puisse être associé à une série de jets gazeux secondaires, et à une série d'organes d'alimentation en verre, coopérant les uns avec les autres pour former une série de centres de fibrage espacés les uns des autres dans une direction perpendiculaire au plan des figures.

Sur la droite des figures 1 et 2 est représenté un émetteur de jets secondaires comprenant en particulier une nourrice à jets 11, porteuse d'une série d'orifices d'émission 12 dont l'un apparaît sur la coupe partielle de la figure 2. De telles nourrices à jets sont décrites dans le brevet 2 374 440 mentionné ci-dessus. Chacune de ces nourrices est munie d'une série d'orifices d'émission de jets, disposés à distance les uns des autres le long d'une direction perpendiculaire au plan de la figure. Chaque nourrice à jets 11 peut être alimentée avec un gaz, par exemple de l'air comprimé, à partir du raccord 13.

Comme dans les techniques de fibrage « tor » expliquées en détail dans les différents brevets et demandes de brevets mentionnés précédemment, les organes d'alimentation en verre 8 et les orifices d'émission de jets 12 sont associés par paires, situées chacune dans un même plan, par exemple dans le pland e la figure 2. On voit aussi sur les figures 1 et 2 un élément de guidage ou déflecteur 14, ayant la forme d'un volet, disposé de manière qu'il intercepte l'écoulement du jet provenant de l'orifice 12, ce qui dévie le jet vers le bas comme indiqué en J. Comme décrit en détail dans le brevet 2 374 440, le déflecteur 14 est associé à une pluralité de jets alignés.

Dans une telle disposition, les jets déviés adjacents se heurtent les uns les autres, ce qui limite l'expansion latérale. Il se forme dans chacun des jets des paires de tourbillons encadrant une zone d'écoulement laminaire stable située dans le milieu de chaque jet. Ces zones se caractérisent par une basse pression avec par conséquent un important appel d'air ambiant ; le courant d'air induit dans chaque zone stable tend à attirer le filet de verre S dans cette zone à partir du bulbe de verre G correspondant l'écoulement du jet l'entraînant alors obliquement vers le bas en direction du courant.

L'étirage s'effectue principalement dans la zone d'interaction du jet secondaire avec le courant, et le courant combiné emporte vers le bas le filament en cours d'étirage.

Dans le mode de réalisation des figures 1 et 2, ainsi que dans les modes de réalisation décrits ci-après, les centres de fibrage (dont un seul est représenté sur les figures 1 et 2) sont de préférence disposés en série et forment un poste ou station de fibrage comprenant d'une part une filière 6 portant une pluralité d'organes d'alimentation en verre 7, et d'autre part une série similaire d'orifices d'émission de jets, associés chacun à l'un des orifices d'alimentation en verre, de façon que le courant principal renferme une multiplicité de zones d'interaction successivement créées par la pénétration de plusieurs jets.

Les fibres ainsi formées dans les différents centres de fibrage sont transportées vers le bas par le courant gazeux et se déposent sur un convoyeur de réception perforé 15 représenté schématiquement en bas de la figure 1. Sous la partie supérieure de ce convoyeur se trouvent une ou plusieurs chambres d'aspiration 16 reliées à un ou plusieurs ventilateurs schématisés en 17. Un organe 18 de guidage des fibres, tel qu'une goulotte de forme conique peut être associé au courant combiné et canaliser les fibres vers le convoyeur. Cette goulotte 18 présente avantageusement une forme évasée dans un plan perpendiculaire au plan de la figure, pour favoriser la répartition des fibres sur toute la largeur du tapis. Dans le plan de la figure sa largeur maximale est telle que l'on puisse disposer les unes à côté des autres plusieurs goulottes, chacune correspondant à un poste de fibrage. Contrairement à ce qui était réalisé antérieurement avec les conformateurs courbes, lorsque le courant gazeux était initialement voisin de l'horizontale, et qu'il fallait le redresser pour le diriger vers le convoyeur, la goulotte ne modifie pas la direction générale des fibres. Elle ne fait pas entrave à leur progression, et ne risque donc pas d'influer sur leurs caractéristiques.

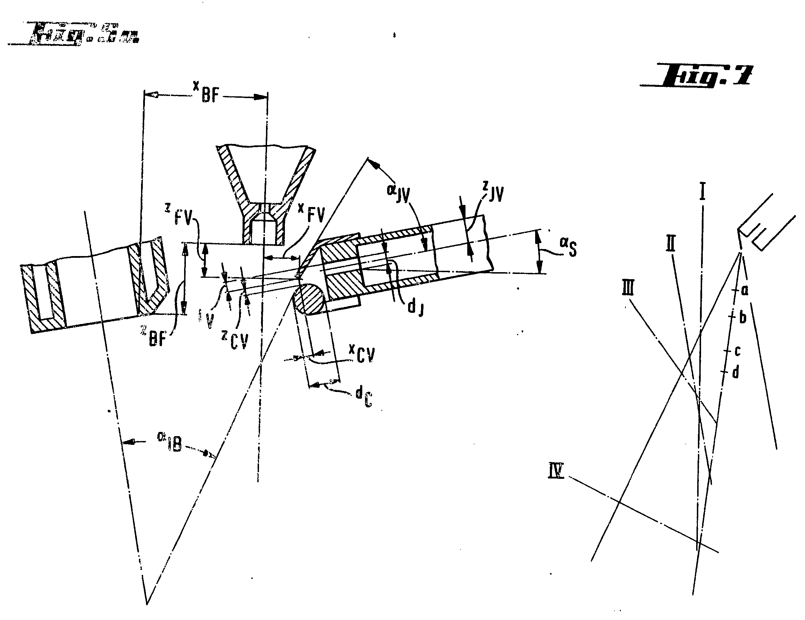

Il est aussi prévu, comme sur la figure 6, de disposer plusieurs séries de stations de fibrage réparties au-dessus du convoyeur 15 de réception des fibres, sur la longueur de celui-ci. On peut voir sur la figure 6 que l'émission des courants suivant une direction voisine de la verticale favorise l'aménagement d'un plus grand nombre de stations de fibrage sur une distance donnée le long du convoyeur 15, en comparaison avec les installations dans lesquelles le courant principal, ou les courants qui transportent les fibres, s'approchent du convoyeur suivant des directions formant des angles faibles avec ce dernier.

On remarquera particulièrement la disposition décrite en référence à la figure 1, selon laquelle le convoyeur 15 se déplace suivant une direction horizontale, tandis que l'écoulement combiné du courant et du jet est dirigé vers le bas pratiquement selon la verticale. Il en résulte que les fibres arrivent sur la surface du convoyeur selon une trajectoire pratiquement perpendiculaire à ce dernier.

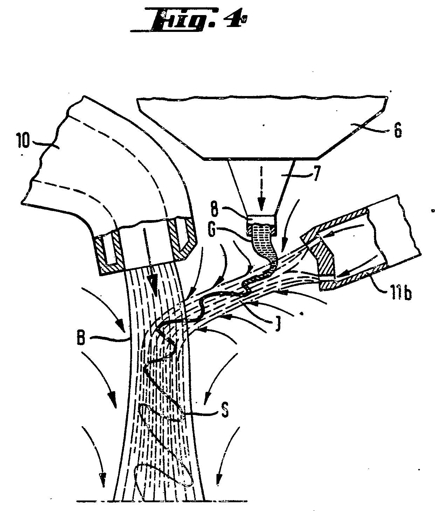

Dans la version représentée sur la figure 3, les parties du dispositif identiques à celles des figures précédentes portent les mêmes références numériques. La nourrice à jets indiquée en 11a peut être identique à celle décrite précédemment pour le premier mode de réalisation, mais les orifices 12a d'émission de jets sont disposés différemment.

Un organe 19 de guidage du jet, en forme de barreau et provoquant un effet Coanda, est placé dans l'écoulement du jet. Ce barreau est monté sur la nourrice à jets 11a par l'intermédiaire de pattes d'assemblage 20 ; son montage et sa disposition sont décrits avec plus de détails dans la demande de brevet français 2 401 109, mentionnée ci-dessus.

Comme cette demande le précise, l'élément de guidage 19 peut soit être placé directement dans l'axe des orifices d'émission des jets, soit se trouver dans une position légèrement décalée par rapport à cet axe. Quand le barreau 19 est légèrement décalé (comme c'est le cas sur la figure 3), l'écoulement des jets en aval du barreau est légèrement dévié, ce que montre aussi la figure 3. Il n'en est évidemment pas de même lorsque le barreau 19 est placé dans le plan des axes des jets. Dans les deux cas, grâce à un espacement approprié, les jets adjacents se heurtent les uns les autres, dans la région de la surface du barreau. Ils développent des paires de tourbillons contrarotatifs bordant chacune une zone d'écoulement laminaire stable avec une importante induction d'air ambiant. Les filets de verre, entraînés dans ces zones par l'air induit, sont ensuite transportés dans l'écoulement des jets puis dans les zones d'interaction que ces jets forment avec le courant principal.

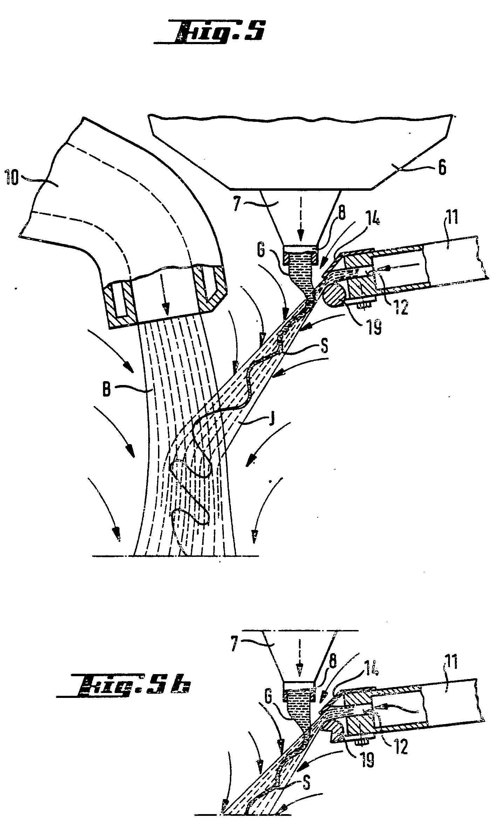

La figure 4 représente une autre variante de centre de fibrage utilisable selon la présente invention. Comme précédemment, des références identiques sont appliquées aux parties non modifiées du dispositif. La nourrice à jets 11b délivre des paires de jets sensiblement identiques, de façon que ceux-ci se rencontrent pour former un écoulement combiné dans lequel est conduit le filet à étirer. Ce type de jets combinés est décrit notamment dans la demande de brevet français 2 401 110. Cette disposition crée aussi une zone d'écoulement laminaire stable avec une induction importante d'air ambiant qui permet d'obtenir la stabilité de l'alimentation de chaque filet de verre dans le jet combiné. Comme dans les autres modes de réalisation, chaque filet de verre est bien sûr transporté dans la zone d'interaction formée par le jet combiné dans un courant principal.

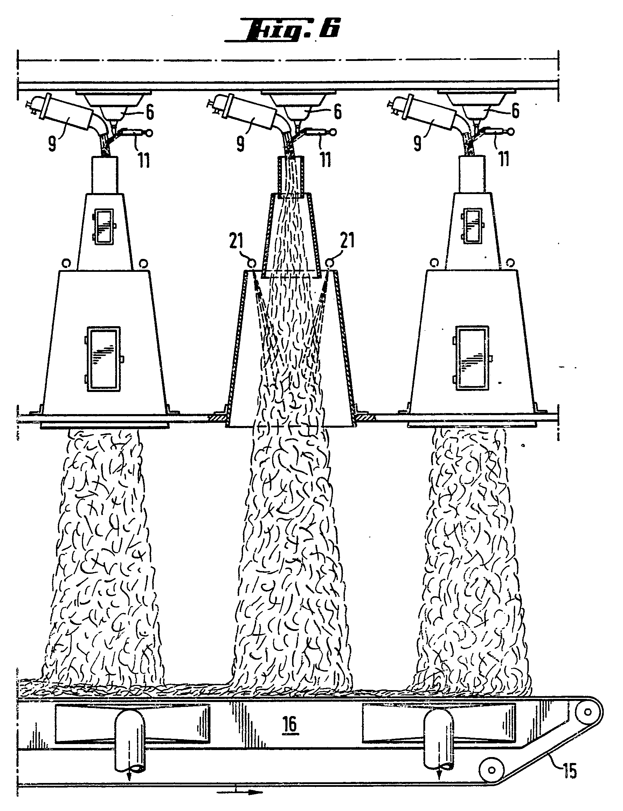

La figure 5 représente une variante du centre de fibrage de la figure 2. Le dispositif se distingue par l'utilisation combinée pour modifier et dévier le jet, du déflecteur 14 et d'un barreau cyclindrique 19, disposé de façon à ce qu'il soit longé par le jet. Dans la position représentée, le jet arrive pratiquement tangentiellement à la surface du barreau, et par un effet de surface tend à adhérer au barreau. Le jet longe ainsi la surface convexe du barreau sur une certaine longueur et se trouve dévié de sa trajectoire. Cette déviation s'ajoute à celle causée par le déflecteur plan. Dans ce mode de réalisation le barreau cylindrique peut être remplacé par une surface convexe convenablement choisie. La déviation obtenue et sa localisation peuvent varier dans une large mesure, en modifiant la courbure, la longueur de la surface convexe longée par le jet, et par sa position par rapport aux autres éléments du dispositif. En particulier en utilisant un barreau, si l'effet de déviation doit être limité de façon très précise, il peut être avantageux d'utiliser un barreau dont un quart par exemple est ôté, comme représenté à la figure 5b. Le décrochement du jet se fera alors automatiquement le long de la génératrice correspondant à la partie manquante du barreau.

Dans le mode représenté à la figure 5, le jet est modifié et dévié par le déflecteur 14. L'introduction du filet de verre dans le jet s'effectue comme décrit à propos de la figure 2.

La présence du barreau à la partie inférieure du jet entraîne une déviation supplémentaire qui permet de réduire l'angle du jet par rapport au courant et par suite évite la formation de courants de rejet dans cet angle.

Sur la figure 5a sont portées les dimensions suivantes :

$x_{BF}$ : distance horizontale de l'axe de la filière au bord le plus proche de l'orifice d'émission du courant.

$z_{BF}$ : distance verticale entre le bord inférieur de la filière et celui de l'orifice d'émission du courant.

$x_{FV}$ : distance horizontale entre l'axe de la filière et l'extrémité du volet.

$z_{FV}$ : distance verticale entre le bord inférieur de la filière et l'extrémité du volet.

$\alpha_S$ : angle d'inclinaison initiale du jet par rapport à l'horizontale.

$d_J$ : diamètre du jet.

$z_{JV}$ : distance entre l'axe du jet et la partie supérieure du déflecteur mesurée suivant la normale à l'axe du jet.

$l_V$ : distance entre la limite supérieure de l'orifice du jet et l'extrémité du déflecteur mesurée suivant la normale à l'axe du jet.

$\alpha_{JV}$ : angle du déflecteur par rapport à l'axe du jet.

$d_C$ : diamètre du barreau cylindrique.

$x_{CV}$ : distance entre l'extrémité du déflecteur et la tangente au barreau normale à l'axe du jet, mesurée dans la direction de l'axe du jet.

$z_{CV}$ : distance entre la tangente au barreau parallèle à l'axe du jet et l'extrémité du déflecteur mesurée suivant la normale à l'axe du jet.

$\alpha_{JB}$ : angle de la direction moyenne du jet et de celle du courant.

Les différents flux gazeux et leurs interactions sont schématisés à la figure 8. Le jet J émis par l'orifice 12 vient buter contre le volet 14. Il donne alors naissance à une zone d'écoulement laminaire encadrée par deux tourbillons. Du bulbe G de matériau, un filet se forme qui pénètre dans la zone laminaire, et est entraîné dans les tourbillons du jet.

A distance du volet déflecteur les tourbillons tendent à fusionner. Le jet atteignant ensuite le courant B pénètre dans celui-ci et forme une paire de tourbillons T dans lesquels s'achève l'étirage du filament.

Le phénomène est sensiblement le même lorsque en plus du volet on utilise le barreau cylindrique comme représenté à la figure 5. Dans ce dernier cas la déviation du jet est accrue.

Sur la figure 8 on a également représenté par de simples flèches les courants I induits par le jet, de même qu'à titre indicatif la localisation et la direction des éventuels courants de rejet R.

La figure 6 présente trois postes de fibrage contigus d'une même ligne de production.

En plus des dispositifs de fibrage proprement dits, le schéma représente des goulottes protectrices (en coupe pour l'une d'elles) formées de trois parties, et qui enveloppent le courant gazeux combiné porteur de la fibre. On voit également schématisés des organes de pulvérisation 21 disposés sur ces goulottes, et à la partie inférieure de la figure le tapis convoyeur 15 et une chambre d'aspiration 16 sous le tapis convoyeur.

Les pulvérisateurs sont utilisés de façon traditionnelle. Ils servent en particulier à la projection d'eau de refroidissement de la fibre et/ou à la projection de compositions de liants destinées à assurer la cohésion du matelas de fibres final.

Dans toutes les variantes décrites précédemment, on remarque que le générateur du courant principal et l'émetteur de jets sont situés de part et d'autre de la source d'alimentation en verre, que dans tous les cas, la trajectoire du courant principal est dirigée vers le bas suivant une direction proche de la verticale, le jet pénétrant latéralement dans le courant principal et que, selon une disposition préférée de la présente invention, le filet de verre entre dans l'écoulement du jet avant d'atteindre la zone d'interaction du courant principal. Cette disposition du générateur du courant principal et de l'émetteur de jets de part et d'autre du filet de verre fondu dirigé vers le bas permet, en particulier avec utilisation d'un déflecteur de jets, d'espacer les uns des autres les différents composants de chaque centre de fibrage ce qui facilite le montage de ces divers composants et, en service, leur maintien aux températures désirées.

Comme nous l'avons vu, la direction de l'écoulement combiné du courant principal et du jet n'est pas nécessairement tout à fait verticale. De même, la direction du convoyeur n'a pas besoin d'être exactement horizontale. Cependant, pour placer le générateur de courant principal et l'émetteur de jets de part et d'autre des filets de verre, en les disposant de façon à réduire l'espace utilisé le long de la ligne de production, l'écoulement combiné du courant principal et du jet doit suivre une trajectoire qui de préférence ne fait pas un angle supérieur à 25° avec la verticale.

Dans les différents modes de réalisation représentés, il est à noter que la tuyère 10 du courant principal est disposée de manière à émettre le courant principal dans une direction formant un angle faible avec la verticale.

La pénétration des jets dans le courant principal provoque une légère déviation de l'écoulement combiné du courant principal et des jets par rapport à la trajectoire initiale du courant principal.

Dans ces modes de réalisation, le jet guidé ou dévié doit avoir une énergie cinétique par unité de

11

# 0 059 145

volume supérieure à celle du courant. Un tel rapport d'énergie peut être obtenu avec un jet à température et vitesse élevées ; cependant, ces conditions tendent à détériorer les éléments de guidage ou les déflecteurs sur lesquels elles provoquent une érosion et des effets indésirables de dilatation et de contraction thermique. Il est donc préférable d'utiliser des jets à température relativement faible.

L'emploi d'un jet à température ambiante permet d'utiliser une source d'air comprimé ordinaire pour l'alimentation en fluide. La température du jet n'est pas nécessairement aussi basse, mais de préférence elle reste nettement inférieure au point de ramollissement de la matière thermoplastique à étirer : dans le cas de l'étirage du verre ou de matières minérales similaires, la température du jet est par exemple inférieure à 200 °C et, de préférence inférieure à 100 °C.

Nous indiquons ci-après des valeurs typiques des paramètres utilisables pour la présente invention. Ces valeurs sont notamment celles qui conviennent pour la formation de fibres à partir de matériaux verriers.

Composition et température du verre

De tels matériaux sont par exemple ceux dont la composition est l'une des suivantes. (Pourcentage en poids).

|  | A | B | C | D |
|---|---|---|---|---|
| $SiO_2$ | 46,92 | 57,00 | 63,00 | 45,32 |
| $Al_2O_3$ | 9,20 | 4,10 | 2,95 | 12,76 |
| $Fe_2O_3$ | 1,62 | 0,35 | 0,30 | 13,09 |
| CaO | 30,75 | 11,31 | 7,35 | 10,71 |
| MnO | 0,16 |  |  |  |
| MgO | 3,95 | 3,69 | 3,10 | 10,13 |
| $Na_2O$ | 3,90 | 13,16 | 14,10 | 2,67 |
| $K_2O$ | 3,50 | 1,54 | 0,80 | 1,34 |
| BaO |  | 1,60 | 2,50 | – |
| $B_2O_3$ |  | 4,55 | 5,90 | – |
| $F_2$ |  | 2,70 |  | – |
| $TiO_2$ |  |  |  | 2,80 |
| Non déterminé |  |  |  | 1,00 |

Pour de telles compositions la température de la filière est avantageusement comprise entre 1 300 et 1 600 °C, et de préférence de 1 400 à 1 500 °C. La température de la matière étirable à la sortie de la filière se situe avantageusement entre 1 200 et 1 500 °C (pour des viscosités variant entre 30 et 100 Po).

Courant gazeux

Il est avantageusement constitué par un gaz de combustion, en particulier de gaz naturel et d'air. Sa température se situe avantageusement entre 1 300 et 1 800 °C et de préférence est d'environ 1 500 °C.
La vitesse du courant à la sortie du brûleur est avantageusement de 200 à 800 m/s.
La largeur de l'orifice d'émission du courant détermine celle du courant. En pratique, une largeur de 5 à 25 mm permet d'obtenir un courant suffisamment large. La longueur de l'orifice d'émission est fonction du nombre de filets de matière étirés par le même courant. Cette longueur peut atteindre et dépasser 600 mm. Les seules limites au nombre des filets de matière traités par un même courant sont d'ordre pratique. Au-delà d'une certaine limite, plus ce nombre est élevé, plus le maintien de conditions identiques sur toute la largeur est difficile à obtenir.
La pression dans le courant à la sortie de l'orifice d'émission est ordinairement peu élevée. La pression dynamique relative ne dépasse ordinairement pas $50.10^3$ Pa, et de préférence pas $25.10^3$ Pa.

Jet gazeux

De préférence, il est formé à partir d'air sous pression. La température du jet est avantageusement

12

comprise entre la température ambiante et 800 °C, sa vitesse et sa pression à la sortie des orifices d'émission sont respectivement de préférence de 200 à 900 m/s et de 1 à $4.10^5$ Pa.

La dimension des orifices d'émission des jets est comprise de préférence entre 0,5 et 4 mm.

Position relative du jet et du courant

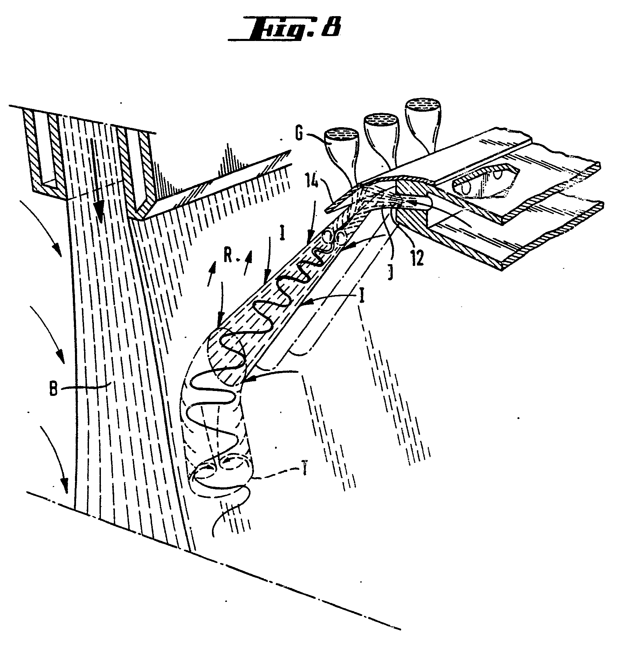

On a dit de façon générale les conditions à respecter pour éviter que la formation de la fibre ne soit perturbée du fait des courants de rejet. A titre indicatif on a représenté à la figure 7 sur un schéma à l'échelle les variations de l'angle de contact du jet dans le courant en fonction de la distance du point de contact à l'orifice d'émission du jet.

Dans la forme proposée, le courant gazeux désigné par l'axe de sa direction est supposé uniforme pour la partie concernée quelle que soit la position d'interception.

Les variations de distance se traduisent dans le jet, par une variation de vitesse en même temps que le jet tend à s'épanouir. On a porté sur le graphique l'épanouissement du jet, et quatre points a, b, c et d sur l'axe médian, pour lesquels la vitesse varie de façon relative comme suit :

a : 153 m/s ; b : 135 m/s ; c : 115 m/s ; d : 108 m/s.

Sur ce graphique les différentes directions de courant I à IV correspondent toutes à un courant de rejet d'intensité similaire et très limitée. On constate comme indiqué précédemment que l'angle d'impact peut être d'autant plus grand que la pénétration du jet dans le courant se produit plus loin de l'orifice du jet.

Les angles entre la direction moyenne du jet et la direction du courant pour les positions I à IV de ce dernier sont respectivement de l'ordre de : I : 8°, II : 18°, III : 43°, IV : 72°.

Dimensions pour la disposition de la figure 5 ou 5a

De façon préférée, l'agencement des différents éléments du dispositif représenté à la figure 5 ou à la figure 5a est tel que les dimensions soient comprises dans les limites suivantes :

| | |
|---|---|
| $x_{BF}$ : 10-30 mm | $d_J$ : 0,5-4 mm |
| $z_{BF}$ : 0-15 mm | $z_{JV}$ : 1,5 mm |
| $x_{VF}$ : 0-5 mm | $\alpha_{JV}$ : 20-60° |
| $z_{FV}$ : 0-5 mm | $1_V$ : 0,5-3 $d_j$ |
| $\alpha_S$ : 0-30° | $\alpha_{JB}$ : 20-60° |

Dans le cas de la figure 5a, les dimensions supplémentaires sont avantageusement :

| | |
|---|---|
| $x_{CV}$ : 0-5 mm | $d_C$ : 3-20 mm |
| $z_{CV}$ : 1,5-4 mm | |

Exemple 1

Dans cet exemple de mise en œuvre du procédé selon l'invention, on a utilisé un dispositif tel que représenté à la figure 2. On a fibré le verre de basalte de composition D dans les conditions suivantes :

— température de la filière : 1 400 °C
— diamètre des orifices de la filière : 2,4 mm
— tirée/jour/trou : 55 kg
— température du courant : 1 500 °C
— vitesse du courant : 580 m/s
— pression dynamique du courant : 33 000 Pa
— température du jet : 20 °C
— vitesse du jet : 330 m/s
— pression dynamique du jet : $2,5 \times 10^5$ Pa

La disposition des différents éléments et leurs dimensions sont les suivantes. Les symboles sont identiques à ceux présentés à la figure 5a.

| | |
|---|---|
| $x_{BF}$ : 24 mm | $d_J$ : 1,5 mm |
| $z_{BF}$ : 8 mm | $z_{JV}$ : 2,5 mm |
| $x_{FV}$ : 2 mm | $\alpha_{JV}$ : 45° |
| $z_{FV}$ : 1,5 mm | |
| $\alpha_S$ : 16° | $1_V = 2 \times d_J = 3$ mm |

On obtient ainsi des fibres dont le Micronaire est d'environ 5 sous 5 g, c'est-à-dire dont le diamètre moyen est de l'ordre de $6.10^{-6}$ m.

Dans les conditions indiquées, on remarque encore que la déviation moyenne du jet par rapport à sa direction initiale est d'environ 52°. L'influence des dimensions du déflecteur est particulièrement importante sur l'angle de déviation. Si au lieu d'avoir $1_v = 2\,d_J$, on dispose un déflecteur plus court correspondant à $1_v = 3/4\,d_J$, les autres paramètres restant identiques, la déviation moyenne du jet n'est plus que de 35° environ.

La valeur de la déviation moyenne ne rend pas compte de l'épanouissement du jet dans le plan de la figure. Cet épanouissement qui se produit de façon systématique, est modifié par la présence du déflecteur. Dans le cas considéré, on observe un épanouissement légèrement moindre pour le déflecteur le plus long ($1_v$).

L'épanouissement du jet dans le cas présent reste néanmoins limité, et au point le plus haut, l'angle du jet et du courant $\alpha_{JB}$ est de l'ordre de 57°.

## Exemple 2

Cet exemple est réalisé dans les mêmes conditions que celles de l'exemple 1 pour ce qui concerne la matière étirable et les caractéristiques des jets et du courant.

Le dispositif utilisé est cette fois celui des figures 5 et 5a. Les dispositions et dimensions sont les mêmes que précédemment, à l'exception des valeurs relatives au jet, ceci pour tenir compte de la présence du barreau cylindrique parmi les moyens de déviation et de modification.

| | |
|---|---|
| $x_{BF}$ : 18 mm | $d_J$ : 1,5 mm |
| $z_{BF}$ : 8 mm | $z_{JV}$ : 2,5 mm |
| $x_{FV}$ : 2 mm | $\alpha_{JV}$ : 45° |
| $z_{FV}$ : 1,5 mm | $d_C$ : 6 mm |
| $\alpha_S$ : 5° | $x_{CV}$ : 2,5 mm |
| | $z_{CV}$ : 2,5 mm |
| | $1_V$ : 1 × $d_J$ = 1,5 mm |

Les fibres obtenues dans ces conditions présentent un Micronaire de l'ordre de 4 sous 5 g, et un diamètre moyen de $5.10^{-6}$ m.

La déviation moyenne du jet par rapport à sa direction initiale est d'environ 74°. Cette déviation globale est donc nettement plus importante qu'avec le déflecteur seul de l'exemple 1, bien que le déflecteur soit plus court (1 $d_J$ au lieu de 2 $d_J$).

Même avec cette forte déviation, le jet pénètre bien dans le courant, et l'angle $\alpha_{JB}$ du jet et du courant au point le plus haut n'est plus que de 33°, ce qui diminue considérablement le risque de perturbation occasionné par les courants de rejet.

Il semble aussi que cette disposition soit un peu plus avantageuse au point de vue du rendement énergétique par unité de poids de fibre produite.

Les résultats obtenus dans le cadre des deux exemples précédents, si l'on ne considère que la fibre produite, sont tout à fait comparables à ceux que l'on obtient par les procédés « tor » antérieurs mis en œuvre suivant une disposition « horizontale ». Vis-à-vis de ces procédés antérieurs, comme on l'a vu, les avantages de l'invention sont d'un autre ordre. Ils concernent en particulier le gain de place le long d'une chaîne de fibrage et la possibilité par suite, soit d'accroître le nombre de postes de fibrages sur une longueur donnée, soit de diminuer la longueur pour un même nombre de postes.

Par rapport à une disposition du type « tor » avec courants horizontaux » et conformateurs, le gain de place peut être évalué entre 50 et 70 %.

Cette réduction se retrouve dans les dimensions de la chambre de réception, dans la quantité d'air aspiré, etc..., et globalement par des conditions de fonctionnement plus économiques.

## Revendications

1. Procédé pour la formation de fibres à partir d'une matière thermoplastique au moyen de courants gazeux assurant l'étirage et le transport des fibres jusqu'à une surface réceptrice, procédé dans lequel on engendre un courant gazeux (B) et au moins un jet gazeux (J), le jet gazeux ayant une section transversale plus petite que celle du courant (B) et une énergie cinétique par unité de volume plus grande que celle du courant, de sorte que le jet étant dirigé de façon qu'il rencontre le courant, il pénètre dans ce dernier sans le traverser en formant une zone d'interaction où s'établissent des mouvements tourbillonnaires de structure régulière, zone dans laquelle est conduit un filet de matière étirable, ledit filet étant issu d'une source de matière étirable, caractérisé en ce que le courant gazeux combiné formé du jet et du courant est orienté sans l'aide d'obstacle de haut en bas, suivant une direction proche de la verticale et faisant un angle avec la verticale inférieur à 45° et dans le plan défini par le jet et le filet de matière étirable, le jet (J) et le courant (B) convergeant de part et d'autre du filet de matière étirable.

2. Procédé selon la revendiction 1, caractérisé en ce que l'angle de la direction du courant combiné avec la verticale est au plus de 25°.

3. Procédé selon la revendication 1 ou la revendication 2, caractérisé en ce que dans l'angle compris entre le courant et le jet, est disposée une arrivée de gaz supplémentaire, dirigée vers le point de rencontre du courant et du jet, et dont le volume, la vitesse et la direction sont choisis de façon à s'opposer à la remontée de gaz de rejet vers l'orifice du brûleur ou la source de matière étirable.

4. Procédé selon la revendication 1 ou la revendication 2, caractérisé en ce que le filet de matière rencontre le jet à distance du point de pénétration du jet dans le courant.

5. Procédé selon la revendication 4, caractérisé en ce que l'angle du jet et du courant est au plus de 60°.

6. Procédé selon l'une quelconque des revendications précédentes, caractérisé en ce que la structure de chaque jet est modifiée de telle sorte qu'il présente après modification une zone d'écoulement laminaire encadrée par deux tourbillons tournant en sens inverse l'un de l'autre, et que le filet de matière correspondant est dirigé de façon à rencontrer le jet dans ladite zone d'écoulement laminaire.

7. Procédé selon la revendication 6, caractérisé en ce que le jet, indépendamment de la modification aboutissant à un changement d'orientation et de structure, avant de pénétrer dans le courant, est soumis à une déviation supplémentaire.

8. Dispositif pour la formation de fibres à partir d'une matière thermoplastique au moyen de courants gazeux comprenant :
— un générateur (9) de courant gazeux (B),
— un émetteur (11) d'une pluralité de jets (J) dirigeant ceux-ci suivant des trajectoires rencontrant celle du courant (B), et tel que la section droite des jets au point de rencontre soit inférieure à celle du courant, et que l'énergie cinétique par unité de volume des jets soit supérieure à celle du courant, et non supérieure à la valeur provoquant la traversée du courant,
— une source (8) de matière étirable délivrant la matière sous forme de filets (S), cette source de matière étant disposée par rapport aux orifices du générateur (9) de courant et de l'émetteur (11) de jets de façon que les filets (S) soient conduits dans les zones d'interaction des jets et du courant, caractérisé en ce que le générateur (9) de courant et l'émetteur (11) de jets sont disposés l'un par rapport à l'autre de telle sorte que le courant combiné, formé par le courant et les jets s'écoule suivant une direction voisine de la verticale, l'angle de ce courant avec la verticale restant inférieur à 45°, et que la source de matière étirable est disposée de sorte que dans chaque plan défini par chacun des jets et le filet correspondant, l'orifice de sortie du générateur de courant et celui du jet se trouvent situés de part et d'autre du filet de matière.

9. Dispositif selon la revendication 8, caractérisé en ce que la source (8) de matière étirable est disposée de façon que la trajectoire des filets (S) de matière qu'elle délivre rencontre celle des jets (J) correspondants à distance du point de rencontre du jet (J) et du courant (B).

10. Dispositif selon l'une des revendications 8 et 9, caractérisé en ce qu'il comprend en outre des moyens de modification des jets placés le long de la trajectoire des jets et engendrant dans chacun de ceux-ci une zone d'écoulement laminaire encadrée par deux tourbillons contra-rotatifs, l'orifice de la source (8) de matière étirable étant disposé de façon à diriger le filet de matière vers ladite zone d'écoulement laminaire.

11. Dispositif selon la revendication 10, caractérisé en ce que les moyens de modification des jets sont constitués par un déflecteur (14) plan, interposé transversalement à la trajectoire des jets, sur une partie au moins de chaque jet.

12. Dispositif selon la revendication 10, caractérisé en ce que les moyens de modification des jets sont constitués par la surface convexe d'un barreau cylindrique (19) disposé sur la trajectoire des jets.

13. Dispositif selon la revendication 10, caractérisé en ce qu'il comprend plusieurs moyens de modification et de déviation des jets placés le long de leurs trajectoires et agissant séparément.

14. Dispositif selon la revendication 13, caractérisé en ce qu'un premier moyen de modification et de déviation est constitué par un déflecteur (14) plan interposé, transversalement à la trajectoire des jets sur une partie au moins de chaque jet, et qu'un second moyen de déviation est constitué par un barreau cylindrique (19) disposé de façon qu'il soit longé par chaque jet sur une partie de sa surface convexe.

## Claims

1. Process for the formation of fibres from a thermoplastic material by means of gaseous currents which draw out and transport the fibres to a receiving surface, in which process a gaseous current (B) is created and a least one gas jet (J) the gas jet having a gross section which is smaller than that of the current (B), and a kinetic energy per unit volume greater than that of the current, in such a manner that, with the jet directed so that it impinges on the current, it penetrates into the latter without passing through it by forming a zone of interaction where there are established eddy movements of regular form, into which zone is conducted a filament of drawable material, the said filament being emitted from a source of drawable material, characterised in that the combined gaseous current formed from the jet and the current is directed downwardly without the aid of obstacles, following a direction close to the vertical and making an angle with the vertical less than 45° and within the plane defined by the jet and the filament of drawable material, the jet (J) and the current (B) converging on the filament of drawable material from either side.

2. Process according to claim 1, characterised in that the angle of the direction of the combined current with the vertical is at the most 25°.

3. Process according to claim 1 or claim 2, characterised in that an inflow of supplementary gas is located within the angle between the current and the jet, and is directed towards the meeting-point of the current and the jet, the volume, velocity and direction of which supplementary gas are selected so as to oppose the upward return of expelled gas towards the source of drawable material.

4. Process according to claim 1 or claim 2, characterised in that the filament of material meets the jet at a distance from the point of penetration of the jet into the current.

5. Process according to claim 4, characterised in that the angle between the jet and the current is at the most 60°.

6. Process according to claim 1 of the preceeding claims, characterised in that the structure of each jet is modified so that after modification it has a zone of laminar flow flanked by two eddies rotating in opposite directions, and in that the corresponding filament of .material is directed so as to meet the jet within the said zone of laminar flow.

7. Process according to claim 6, characterised in that the jet, independently of the modification leading to a change in orientation and in structure, is submitted to an additional deflection before penetrating into the current.

8. Apparatus for the formation of fibres from a thermoplastic material by means of gaseous currents, comprising :
— a generator (9) of gaseous current (B),
— an emitter (11) for a plurality of jets (J) which directs them along paths which meet that of the current (B), such that the cross-section of the jets at the point of intersection is smaller than that of the current, and in that the kinetic energy per unit volume of the jets is greater than that of the current, and not greater than the value which would cause them to pass right through the current,
— a source (8) of drawable material delivering the material in the form of filaments (S), this source of material being arranged relative to the orifices of the current generator (9) and the jet emitter (11) in such a way that the filaments (S) are conducted into the zones of interaction of these jets and the current, characterised in that the current generator (9) and the jet emitter (11) are arranged relative to one another in such a way that the combined current, formed by the current and the jets, flows in a direction close to the vertical, the angle of the current with the vertical remaining less than 45°, and in that the source of drawable material is arranged in such a way that in each plane defined by each of the jets and the corresponding filament, the orifice at the outlet of the current generator and that of the jet are located on either side of the filament of material.

9. Apparatus according to claim 8, characterised in that the source (8) of drawable material is aranged in such a way that the path of the filaments (S) of material which it delivers meets that of the corresponding jets (J) at a distance from the meeting point of the jet (J) and the current (B).

10. Apparatus according to either of claims 8 and 9 characterised in that it also includes means for modifying the jets located along the path of the jets and causing the formation within each of the latter of a zone of laminar flow flanked by two contra-rotating eddies, the orifice in the source (8) of drawable material being arranged so as to direct the filament of material towards the said zone of laminar flow.

11. Apparatus according to claim 10, characterised in that the means for modifying the jets is formed by a flat deflector (14), interposed transverse to the path of the jets, over at least part of each jet.

12. Apparatus according to claim 10, characterised in that the means of modifying the jets is formed by the convex surface of a cyclindrical bar (19) arranged in the path of the jets.

13. Apparatus according to claim 10, characterised in that it includes several means for modifying and deviating the jets located along their paths and acting separately.

14. Apparatus according to claim 13, characterised in that a first modifying and deviating means is formed by a flat deflector (14) interposed transverse to the path of the jets over at least part of each jet, and in that a second deviating means is formed by a cylindrical bar (19) disposed in such a way that it is bordered by each jet over a part of its convex surface.

## Patentansprüche

1. Verfahren zur Herstellung von Fasern aus einem thermoplastischen Material mittels Gasströmen zum Ausziehen und zum Transport der Fasern zu einer Aufnahmefläche, bei welchem ein Gasstrom (B) und mindestens ein Gasstrahl (J) mit einem gegenüber dem Gasstrom (B) kleineren Querschnitt und mit größerer kinetischer Energie pro Volumeneinheit .derart erzeugt werden, daß der derart gerichtete Gasstrahl in den Gasstrom ohne ihn zu durchqueren unter Bildung einer Wechselwirkungszone eindringt, in welcher sich Wirbel mit regelmäßiger Struktur ausbilden und in welche ein Faden aus dem ausziehbaren Material aus einer entsprechenden Materialquelle zugeführt wird, dadurch gekennzeichnet, daß der aus Gasstrahl und Gasstrom gebildete kombinierte Gasstrom hindernisfrei von oben nach unten entsprechend einer der Vertikalen angenäherten Richtung unter einem Winkel von weniger als 45° zur Vertikalen in der durch den Strahl und den Faden aus ausziehbarem Material gebildeten Ebene gerichtet wird, wobei der Gasstrahl (J) und der Gasstrom (B) beiderseits Seiten des Fadens aus ausziehbarem Material konvergieren.

2. Verfahren nach Anspruch 1, dadurch gekennzeichnet, daß der Winkel der Richtung des kombinierten Gasstromes mit der Vertikalen höchstens 25° beträgt.

3. Verfahren nach Anspruch 1 oder 2, dadurch gekennzeichnet, daß im Winkel zwischen Gasstrom und Gasstrahl eine auf den Auftreffpunkt von Gasstrom und Gasstrahl gerichtete Zufuhr für zusätzliches Gas angeordnet ist, dessen Volumen, Geschwindigkeit und Richtung so gewählt sind, daß einem Aufsteigen von Rückstrahlgas zur Öffnung des Brenners oder zur Quelle an ausziehbarem Material entgegengewirkt wird.

4. Verfahren nach Anspruch 1 oder 2, dadurch gekennzeichnet, daß der Faden aus ausziehbarem Material auf den Gasstrahl im Abstand von der Eindringstelle des Gasstrahles in den Gastrom auftrifft.

5. Verfahren nach Anspruch 4, dadurch gekennzeichnet, daß der Winkel des Gasstrahles und des Gasstromes höchstens 60° beträgt.

6. Verfahren nach einem der vorhergehenden Ansprüche, dadurch gekennzeichnet, daß die Struktur eines jeden Gasstrahles derart verändert wird, daß der Gasstrahl nach der Veränderung eine laminare Strömungszone aufweist, die durch zwei gegensinnig drehende Wirbel eingerahmt ist, und daß der entsprechende Materialfaden so gerichtet ist, daß er auf den Gasstrahl in dieser laminaren Strömungszone auftrifft.

7. Verfahren nach Anspruch 6, dadurch gekennzeichnet, daß der Gasstrahl unabhängig von der zu einer Änderung der Ausrichtung und der Struktur führenden Veränderung vor dem Eindringen in den Gasstrom einer zusätzlichen Ablenkung unterzogen wird.

8. Vorrichtung zur Herstellung von Fasern aus einem thermoplastischen Material mittels Gasströmen, mit
— einer Einrichtung (9) zum Erzeugen eines Gasstromes (B),
— einer Einrichtung (11) zur Erzeugung einer Anzahl von Gasstrahlen (J), die so geführt sind, daß sie auf den Gasstrom (B) auftreffen, wobei die Querschnittsfläche der Gasstrahlen an der Auftreffstelle kleiner als die des Gasstromes ist und die kinetische Energie pro Volumeneinheit der Gasstrahlen größer als die des Gasstromes ist, jedoch den Wert nicht übersteigt, der ein Durchqueren des Gasstromes bewirkt,
— einer Quelle (8) von ausziehbarem Material für die Abgabe des Materials in Form von Fäden (S), wobei diese Materialquelle derart relativ zu den Öffnungen der Einrichtung (9) zur Erzeugung des Gasstromes und der Einrichtung (11) zur Erzeugung der Gasstrahlen angeordnet ist, daß die Fäden (S) in den Wechselwirkungszonen der Gasstrahlen und des Gasstromes geführt werden, dadurch gekennzeichnet, daß die Einrichtung (9) zur Erzeugung des Gasstromes und die Einrichtung (11) zur Erzeugung der Gasstrahlen relativ zueinander derart angeordnet sind, daß der durch den Gasstrom und die Gasstrahlen gebildete kombinierte Gasstrom entsprechend einer der Vertikalen nahen Richtung strömt, wobei der Winkel des Gasstromes mit der Vertikalen kleiner als 45° ist, und daß die Materialquelle derart angeordnet ist, daß in jeder durch die Gasstrahlen und den entsprechenden Faden gebildeten Ebene die Austrittsöffnung der den Gasstrom erzeugenden Einrichtung und die Austrittsöffnung für den Gasstrahl zu beiden Seiten des Materialfadens angeordnet sind.

9. Vorrichtung nach Anspruch 8, dadurch gekennzeichnet, daß die Materialquelle (8) derart angeordnet ist, daß die Bahn der Fäden (S) aus ausziehbarem Material auf die entsprechenden Gasstrahlen (J) im Abstand vom Auftreffpunkt des Gasstrahles (J) und des Gasstromes (B) auftrifft.

10. Vorrichtung nach einem der Ansprüche 8 und 9, dadurch gekennzeichnet, daß die Vorrichtung eine Einrichtung zur Veränderung der Gasstrahlen besitzt, welche längs der Bahn der Gasstrahlen angeordnet ist und in jedem dieser Gasstrahlen eine Zone mit laminarer Strömung erzeugt, die durch zwei gegensinnig drehende Wirbel eingerahmt ist, und daß die Öffnung der Quelle (8) an ausziehbarem Material derart angeordnet ist, daß der Materialfaden auf die Zone mit laminarer Strömung gerichtet ist.

11. Vorrichtung nach Anspruch 10, dadurch gekennzeichnet, daß die Einrichtung zur Veränderung der Gasstrahlen durch ein ebenes Ablenkteil (14) gebildet ist, welches quer zur Bahn der Gasstrahlen auf mindestens einem Teil eines jeden Strahles vorgesehen ist.

12. Vorrichtung nach Anspruch 10, dadurch gekennzeichnet, daß die Einrichtung zur Veränderung der Gasstrahlen durch die konvexe Fläche eines Zylinders (19) gebildet ist, welcher auf der Bahn der Gasstrahlen angeordnet ist.

13. Vorrichtung nach Anspruch 10, dadurch gekennzeichnet, daß die Vorrichtung mehrere gesondert voneinander arbeitende Einrichtungen zur Veränderung und Ablenkung der Gasströme längs deren Bahnen aufweist.

14. Vorrichtung nach Anspruch 13, dadurch gekennzeichnet, daß eine erste Einrichtung zur Veränderung und Ablenkung durch ein ebenes Ablenkteil (14) gebildet ist, welches quer zur Bahn der Gasstrahlen auf mindestens einem Teil eines jeden Strahles vorgesehen ist, und daß eine zweite Ablenkeinrichtung durch einen derart angeordneten Zylinder (19) gebildet ist, daß jeder Gasstrahl längs eines Teiles seiner konvexen Fläche geführt ist.

17

**Fig. 1**

Fig. 2

Fig. 3

_Fig. 4_

# Fig. 5

# Fig. 5 b

## Fig. 6

Fig. 2

Fig. 8